# EUROPEAN PATENT APPLICATION

(11) **EP 4 694 533 A1**
(43) Date of publication of application: **11.02.2026**
(21) Application number: 24784158.8
(22) Date of filing: 28.03.2024
(51) Int. Cl.: H04W 74/08

(54) **METHOD AND DEVICE USED FOR WIRELESS COMMUNICATION**

(30) Priority: 01.04.2023 CN 202310349701
(71) Applicant: Apogee Networks, LLC, Dallas, TX 75201 (US)
(72) Inventor: ZHANG, Xiaobo, Shanghai 201206 (CN); YU, Qiaoling, Shanghai 201206 (CN)
(74) Representative: Gunzelmann, Rainer
(86) International application number: PCT/CN2024/084340
(87) International publication number: WO 2024/208073

(57) **Abstract**

The present application discloses a method and device used for wireless communication. A first node executes a first RA process, the first RA process comprising: initialization; selection of a first RA resource; and transmission of a first message in the first RA resource, wherein the first RA resource is located on a first carrier; whether the first carrier is obtained in the initialization of the first RA process is related to a trigger event of the first RA process; when the first RA process is triggered by SDT, the first carrier is obtained before the first RA process; when the first RA process is triggered by other events, the first carrier is obtained in the initialization of the first RA process; and candidates for said other events include initial access. The present application avoids the problem caused by inconsistent carrier selection, and maintains good compatibility.

## Description

### Technical Field

The present application relates to a transmission method and device in a wireless communication system, in particular to a transmission method and device for an RRC_inactive state.

### Background Art

NR (New Radio) supports an RRC (Radio Resource Control)_inactive (RRC_INACTIVE) RRC state. Until 3GPP (the 3rd Generation Partnership Project) Rel-16, transmitting or receiving data in the RRC_inactive state was not supported. Rel-17 has carried out a work item (WI) of "Small Data Transmission (SDT) in NR Inactive State", and formulated corresponding technical specifications for MO (UL (Uplink))-SDT, allowing to send small packet transmission of UL-oriented packets in an RRC_inactive state, comprising CG-SDT (Configured Grant-based SDT) and RA-SDT (Random Access-based SDT).

### Summary of the Invention

Through research, the inventors found that an existing random access process may not be fully applicable to SDT transmission. In response to the above problem, the present application provides a solution. It should be noted that although the motivation of the present application comes from an NR system, the present application is also applicable to scenarios such as LTE systems. Further, although the present application gives specific implementations for MO-SDT in an RRC (Radio Resource Control)_inactive state, the present application can also be used in scenarios such as MT-SDT (Small Packet Transmission) in the RRC_inactive state to achieve technical effects similar to those of MO-SDT in the RRC_inactive state. Further, although the original intention of the present application is for a Uu air interface, the present application can also be used for a PC5 interface. Further, although the original intention of the present application is for scenarios between terminals and base stations, the present application is also applicable to a V2X (Vehicle-to-Everything) scenario, as well as communication scenarios between terminals and relays and between relays and base stations to achieve technical effects similar to those in the scenarios between terminals and base stations. Further, although the original intention of the present application is for scenarios between terminals and base stations, the present application is also applicable to a communication scenario of IAB (Integrated Access and Backhaul) to achieve technical effects similar to those in the scenarios between terminals and base stations. Further, although the original intention of the present application is for a terrestrial network scenario, the present application is also applicable to a non-terrestrial network (NTN) communication scenario to achieve technical effects similar to those in the TN scenario. The use of a unified solution for different scenarios also helps to reduce hardware complexity and costs.

As one embodiment, the interpretation of the terminologies in the present application refers to the definition of the specification protocol TS36 series of 3GPP.

As one embodiment, the interpretation of the terminologies in the present application refers to the definition of the specification protocol TS38 series of 3GPP.

As one embodiment, the interpretation of the terminology in the present application refers to definitions of TS37 series of a standard protocol of 3GPP.

As one embodiment, the interpretation of the terminologies in the present application refers to the definition in the specification protocol of IEEE (Institute of Electrical and Electronics Engineers).

It should be noted that, in the absence of conflicts, embodiments and features in the embodiments of any node of the present application may be applied to any other nodes. In the absence of conflicts, the embodiments and features in the embodiments of the present application may be arbitrarily combined with each other.

The present application discloses a method in a first node used for wireless communication, characterized by comprising:
executing a first RA (Random Access) process, the first RA process comprising initialization; selection of a first RA resource; and transmission of a first message in the first RA resource,
wherein the first RA resource is located on a first carrier; whether the first carrier is obtained in the initialization of the first RA process is related to a trigger event of the first RA process; when the first RA process is triggered by SDT, the first carrier is obtained before the first RA process or obtained in the initialization of the first RA process; when the first RA process is triggered by other events, the first carrier is obtained in the initialization of the first RA process; and candidates for the other events comprise initial access.

As one embodiment, when the first RA process is triggered by SDT, the first carrier is obtained before the first RA process.

As one embodiment, the above method avoids conflicts between carriers selected in an SDT process and carriers selected in an RA process.

As one embodiment, the above method can obtain carriers for RA in advance for an SDT process.

Specifically, according to one aspect of the present application, it is characterized by comprising:
obtaining a first carrier; and in response to the presence of valid RA resources on the first carrier, initiating a first SDT process,
wherein the first SDT process is used for triggering the first RA process.

As one embodiment, the first carrier is obtained before the initialization of the first RA process.

As one embodiment, the above method avoids the problem that the first SDT process lacks valid RA resources due to carrier selection in the RA process.

Specifically, according to one aspect of the present application, it is characterized in that the first RA process is triggered by SDT, the first carrier is obtained before the first RA process, and the initialization of the first RA process does not comprise carrier selection.

The above method simplifies hardware complexity of the first node or saves power consumption.

Specifically, according to one aspect of the present application, it is characterized in that the first RA process is triggered by SDT, and the first carrier is obtained before the first RA process; and the initialization of the first RA process comprises carrier selection, and the first message is transmitted in the first RA resource only when the first carrier is selected in the carrier selection of the first RA process.

The above method maintains compatibility with existing solutions as far as possible, while avoiding conflicts between carriers selected in the SDT process and carriers selected in the RA process.

As one embodiment, channel quality for determining the first carrier is used for the carrier selection comprised in the initialization of the first RA process.

As one embodiment, the first node is maintained in an RRC_inactive state only when the first carrier is selected in the initialization of the first RA process.

As one embodiment, the first node is maintained in an RRC_inactive state instead of entering an RRC_idle state only when the first carrier is selected in the initialization of the first RA process.

The above method or embodiments avoid the impact of channel quality changes on the performance of random access on the premise of being compatible with the existing solutions as far as possible.

Specially, according to one aspect of the present application, it is characterized in that the first RA process is triggered by SDT; and the initialization of the first RA process comprises carrier selection, and the first carrier is obtained in the initialization of the first RA process to ensure that both of two candidate carriers for the carrier selection comprise valid RA resources.

The above method balances the conflict in carrier selection and the performance of random access.

The present application discloses a first node used for wireless communication, characterized by comprising:
a first processing machine executing a first RA process, the first RA process comprising initialization; selection of a first RA resource; and transmission of a first message in the first RA resource,
wherein the first RA resource is located on a first carrier; whether the first carrier is obtained in the initialization of the first RA process is related to a trigger event of the first RA process; when the first RA process is triggered by SDT, the first carrier is obtained before the first RA process or obtained in the initialization of the first RA process; when the first RA process is triggered by other events, the first carrier is obtained in the initialization of the first RA process; and candidates for the other events comprise initial access.

As one embodiment, when the first RA process is triggered by SDT, the first carrier is obtained before the first RA process.

### Brief Description of the Drawings

Other features, objects and advantages of the present application will become more apparent by reading the detailed description of non-limiting embodiments with reference to the following drawings:
FIG. 1 shows a schematic diagram of a first RA process according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of a first message according to one embodiment of the present application;
FIG. 6 shows a flowchart of obtaining a first carrier according to one embodiment of the present application;
FIG. 7 shows a flowchart of obtaining a first carrier according to another embodiment of the present application; and
FIG. 8 shows a structural block diagram of a processing device used in a first node according to one embodiment of the present application.

### Detailed Description of Embodiments

The technical solution of the present application will be further described in detail below in conjunction with the accompanying drawings. It should be noted that, in the absence of conflicts, embodiments and features in the embodiments of the present application may be arbitrarily combined with each other.

### Embodiment 1

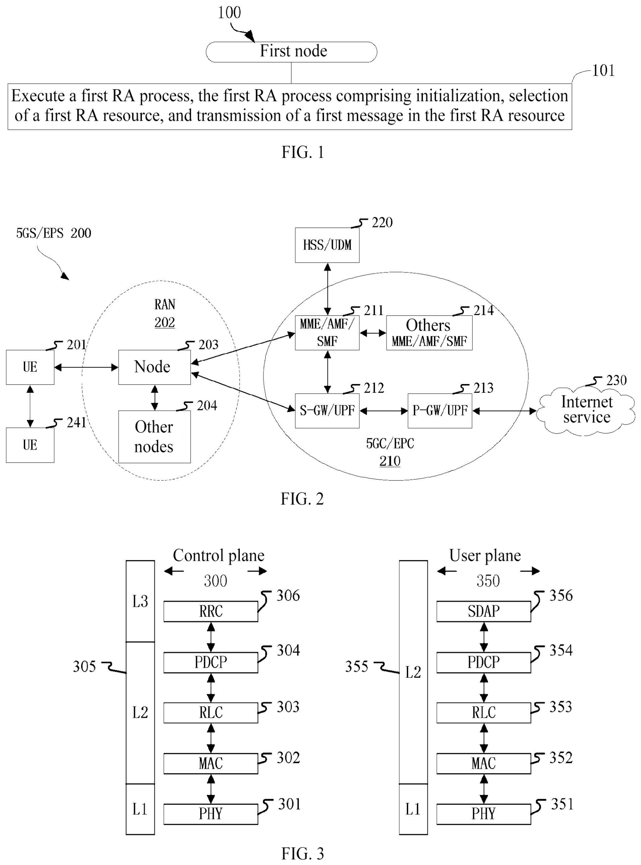

Embodiment 1 illustrates a schematic diagram of a first RA process according to one embodiment of the present application, as shown in FIG. 1.

In step S101, a first node 100 executes a first RA process, the first RA process comprising: initialization; selection of a first RA resource; and transmission of a first message in the first RA resource;

In Embodiment 1, the first RA resource is located on a first carrier; whether the first carrier is obtained in the initialization of the first RA process is related to a trigger event of the first RA process; when the first RA process is triggered by other events, the first carrier is obtained in the initialization of the first RA process; and candidates for the other events comprise initial access.

As one embodiment, when the first RA process is triggered by SDT, the first carrier is obtained before the first RA process.

As one embodiment, when the first RA process is triggered by SDT, the first carrier is obtained before the first RA process or obtained in the initialization of the first RA process.

As one embodiment, the initialization comprises initializing RA-related parameters, the RA-related parameters depending on a configuration of RRC (Radio Resource Control).

Typically, the RA-related parameters are used for purposes such as RA type selection, RA resource selection, or calculation of RA preamble transmission power. Candidates for the RA type comprise 2-step RA and 4-step RA.

As one embodiment, the RA-related parameters comprise a prach-ConfigurationIndex and an msgA-PRACH-ConfigurationIndex.

As one embodiment, the RA-related parameters comprise preambleReceivedTargetPower and msgA-PreambleReceivedTargetPower.

As one embodiment, the RA-related parameters comprise an rsrp-ThresholdSSB, an msgA-RSRP-ThresholdSSB, and an rsrp-ThresholdCSI-RS.

As one embodiment, the RA-related parameters comprise rsrp-ThresholdSSB-SUL.

As one embodiment, the initialization comprises flushing the Message 3 (Msg3) buffer and clearing the Message A (MSGA) buffer.

As one embodiment, the initialization comprises setting PREAMBLE_TRANSMISSION_COUNTER to 1, PREAMBLE_POWER_RAMPING_COUNTER to 1, PREAMBLE_BACKOFF to 0 milliseconds, and POWER_OFFSET_2STEP_RA to 0 decibels (dB).

Typically, obtaining the first carrier depends on or comprises carrier selection.

As one embodiment, when the first RA process is triggered by the other events, the initialization comprises carrier selection.

Unless otherwise specified, the following embodiments regarding carrier selection are applicable to both the obtaining of the first carrier and the first RA process in the absence of conflicts.

Typically, the carrier selection is used for selecting one from both an SUL (Supplementary Uplink) carrier and a NUL (Normal Uplink) carrier.

As one embodiment, the carrier selection depends on RSRP (Reference Signal Received Power) of a first RS resource.

As one embodiment, the carrier selection depends on comparing RSRP of a first RS resource with a first threshold, the first threshold being configurable.

As one embodiment, the first threshold is *rsrp-ThresholdSSB-SUL.*

As one embodiment, the first RS resource is one SSB (SS/PBCH block) or one CSI-RS (Channel-State Information-Reference Signal) resource.

As one embodiment, the first RS resource is a downlink pathloss reference.

As one embodiment, the downlink pathloss reference is used for calculating the transmission power of an RA preamble.

As one embodiment, the downlink pathloss reference is used for calculating the transmission power of a PUSCH (Physical Uplink Shared Channel).

As one embodiment, the first RS resource depends on an indication of a higher layer signaling.

As one embodiment, the higher layer signaling comprises pathlossReferenceRSs and a pucch-PathlossReferenceRS-Id.

As one embodiment, the first RS resource is self-determined by the first node 100, for example, is an SSB used by the first node 100 to obtain an MIB (Master Information Block).

As one embodiment, when the RSRP of the first RS resource is less than the rsrp-ThresholdSSB-SUL, a SUL carrier is selected; otherwise, the NUL carrier is selected.

Typically, the SUL carrier and the NUL carrier belong to the same TAG (Timing Advance Group).

As one embodiment, the SUL carrier and the NUL carrier are configured to the same serving cell.

As one embodiment, the SUL carrier, the NUL carrier and the first RS resource are configured to the same serving cell.

As one embodiment, the SUL carrier and the NUL carrier are allocated to a first cell, and the first RS resource is allocated to a second cell.

As one embodiment, when the first RA process is triggered by SDT, the initialization does not comprise the carrier selection.

The above embodiment simplifies the operation of the first node and reduces hardware complexity and power consumption.

As one embodiment, when the first RA process is triggered by SDT, the initialization of the first RA process comprises the carrier selection.

The above embodiment has good compatibility or minimal changes to the standard.

As one sub-embodiment of the above embodiment, the first message is transmitted in the first RA resource only when the first carrier is selected in the carrier selection of the first RA process, i.e., the step 101 is executed only when the first carrier is selected in the carrier selection of the first RA process.

In the above sub-embodiment, a carrier occupied by RA-SDT (i.e., the first carrier) is obtained before the first RA process, and the carrier selection in the first RA process may be considered as a confirmation of the first carrier.

As one specific implementation of the above sub-embodiment, the carrier selection in the first RA process selects one from both an SUL carrier and an NUL carrier, and only the first carrier in the SUL carrier and the NUL carrier is configured with valid RA resources.

As one specific implementation of the above sub-embodiment, the same RSRP value is used for the carrier selection of the first RA process and obtaining of the first carrier.

The above implementation can ensure compatibility to the greatest extent.

As one sub-embodiment of the above embodiment, the first carrier is obtained in the initialization of the first RA process to ensure that both of two candidate carriers for the carrier selection comprise valid RA resources.

The above sub-embodiment can maximize the probability of executing RA-SDT, i.e., a carrier selected in the carrier selection of the first RA process does not need to be the same as a carrier selected in the process of determining that RA-SDT conditions are met.

As one specific implementation of the above sub-embodiment, the carrier selection of the first RA process selects one from both an SUL carrier and an NUL carrier, and both the SUL carrier and the NUL carrier are configured with valid RA resources.

As one embodiment, one carrier being configured with valid RA resources comprises: one RA resource set for RA-SDT is configured on this carrier.

As one embodiment, one carrier being configured with valid RA resources comprises: one RA resource set for RA-SDT is configured on this carrier, and this RA resource set can be used for indicating all features that trigger a corresponding RA process (i.e., a first RA process in the present application).

As one embodiment, one carrier being configured with valid RA resources comprises: one RA resource set for RA-SDT is configured on this carrier, this RA resource set can be used for indicating part of features that trigger a corresponding RA process (i.e., a first RA process in the present application), and this RA resource set is selected according to the priority of features.

As one embodiment, RA resource sets selected according to the priority of features comprise: first, an RA resource set configured with a highest-priority feature from all available RA resource sets, the highest-priority feature being a feature with a highest priority among the features that trigger the corresponding RA process; and if there exist a plurality of RA resource sets configured with the highest-priority feature, further selection is performed using a next-highest-priority feature until a unique RA resource set is selected. For a specific scheme for selecting an RA resource set according to the priority of features, please refer to Chapter 5.1.1d of TS38.321.

As one embodiment, one carrier being configured with valid RA resources refers to: one RA resource set for RA-SDT is configured on this carrier, and this RA resource set can be selected according to Chapter 5.1.1b of TS38.321.

As one embodiment, the candidates for the other events comprise one or more of RRC connection re-establishment, SR (Scheduling Request) failure, beam failure recovery, and consistent uplink Listen-Before-Talk failure on a special cell (Consistent UL LBT failure on SpCell).

### Embodiment 2

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as a 5GS (5G System)/EPS (Evolved Packet System) 200 or some other suitable terminologies. The 5GS/EPS 200 comprises at least one of UE (User Equipment) 201, an RAN (radio access network) 202, a 5GC (5G Core Network)/EPC (Evolved Packet Core) 210, an HSS (Home Subscriber Server)/UDM (Unified Data Management) 220, and an Internet service 230. The 5GS/EPS may be interconnected with other access networks, but these entities/interfaces are not shown for simplicity. As shown in the figure, the 5GS/EPS provides a packet switching service, however, those skilled in the art will readily understand that various concepts presented throughout the present application may be extended to networks or other cellular networks that provide circuit switching services. The RAN comprises a node 203 and other nodes 204. The node 203 provides user and control plane protocol termination towards the UE201. The node 203 may be connected to other nodes 204 via an Xn interface (e.g., backhaul)/X2 interface. The node 203 may also be referred to as a base station, a base transceiver station, a radio base station, a radio transceiver, a transceiver function, a basic service set (BSS), an extended service set (ESS), a TRP (Transmitter Receive Point), or some other suitable terminologies. The node 203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, a non-terrestrial base station communication, a satellite mobile communication, a global positioning system, a multimedia device, a video device, a digital audio player (e.g., an MP3 player), a camera, a game console, a drone, an aircraft, a narrowband Internet of Things device, a machine type communication device, a land vehicle, an automobile, a wearable device, or any other similarly functional devices. Those skilled in the art may also refer to the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminologies. The node 203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that handles a signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises an operator's corresponding Internet protocol service, which may specifically comprise the Internet, an intranet, an IMS (IP Multimedia Subsystem), and a packet switching streaming service.

As one embodiment, the UE201 corresponds to the first node in the present application.

As one embodiment, the UE201 is one piece of user equipment (UE).

As one embodiment, the UE201 is one basestation (BS) device.

As one embodiment, the UE201 is one relay device.

As one embodiment, the node 203 corresponds to the second node in the present application.

As one embodiment, the node 203 is one basestation device.

As one embodiment, the node 203 is one piece of user equipment.

As one embodiment, the node 203 is one relay device.

As one embodiment, the user equipment supports transmission in a non-terrestrial network (NTN).

As one embodiment, the user equipment supports transmission in a terrestrial network (TN).

As one embodiment, the user equipment comprises a mobile phone, or a terminal, or an aircraft, or a vehicle-mounted terminal, or a ship, or an Internet of Things terminal, or an industrial Internet of Things terminal, or a test device, or a signaling tester.

As one embodiment, the basestation device comprises a base transceiver station (BTS).

As one embodiment, the basestation device comprises a NodeB (NB), or a gNB, or an eNB, or an ng-eNB, or an en-gNB, or a TRP (Transmitter Receiver Point), or a CU (Centralized Unit), or a DU (Distributed Unit).

As one embodiment, the basestation device supports transmission in a non-terrestrial network.

As one embodiment, the basestation device supports transmission in a terrestrial network.

As one embodiment, the basestation device comprises a macro cellular base station, or a micro cell base station, or a pico cell base station, or a Femtocell, or a test device, or a signaling tester.

As one embodiment, the basestation device comprises an IAB (Integrated Access and Backhaul)-node, or an IAB-donor, or an IAB-donor-CU, or an IAB-donor-DU, or an IAB-DU, or an IAB-MT.

As one embodiment, the relay comprises a relay, or an L3 relay, or an L2 relay, or a router, or a switch, or user equipment, or a basestation device.

### Embodiment 3

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a Layer 1, a Layer 2, and a Layer 3. The Layer 1 (L1 layer) is the lowest layer and implements various PHY (Physical Layer) signal processing functions. The L1 layer will be referred to as a PHY301 herein. The Layer 2 (L2 layer) 305 is above the PHY301, and comprises an MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper-layer data packets, retransmission of lost data packets, and reordering of data packets to compensate for out-of-order reception due to an HARQ (Hybrid Automatic Repeat Request). The MAC sublayer 302 provides multiplexing between logical and transmission channels. The MAC sublayer 302 is also responsible for allocating various radio resources (e.g., resource blocks) in one cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring a lower layer using an RRC signaling. The radio protocol architecture for the user plane 350 comprises a Layer 1 (L1 layer) and a Layer 2 (L2 layer). The radio protocol architecture in the user plane 350 is substantially the same as the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for the upper-layer data packets to reduce radio transmission overhead. The L2 layer 355 in the user plane 350 further comprises an SDAP (Service Data Adaptation Protocol) sublayer 356, and the SDAP sublayer 356 is responsible for mapping between QoS flows and data radio bearers (DRBs) to support the diversity of services.

As one embodiment, the radio protocol architecture in FIG. 3 is applicable to the first node in the present application.

As one embodiment, the radio protocol architecture in FIG. 3 is applicable to the second node in the present application.

As one embodiment, the first message in the present application is generated at the MAC302.

As one embodiment, the first message in the present application is generated at the PHY301 and the MAC302.

As one embodiment, the first RA process in the present application is executed at the MAC302.

As one embodiment, the first RA process in the present application is executed at the MAC302 and the PHY301.

### Embodiment 4

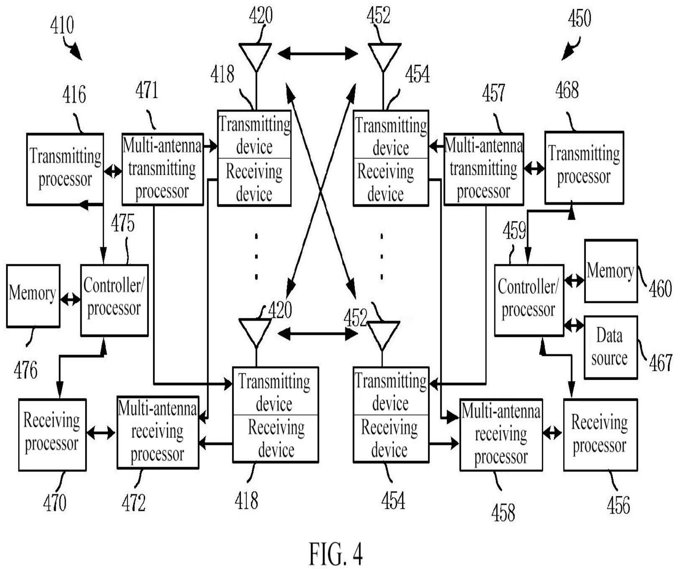

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper-layer data packets from a core network are provided to the controller/processor 475. The controller/processor 475 implements the functionality of the L2 layer. In the transmission from the second communication device 410 to the first communication device 450, the controller/processor 475 provides header compression, encryption, packet segmentation and reordering, multiplexing between logical and transmission channels, and radio resource allocation to the first communication device 450 based on various priority metrics. The controller/processor 475 is also responsible for retransmission of lost packets and signalings to the first communication device 450. The transmitting processor 416 and the multi-antenna transmitting processor 471 implement various signal processing functions for the L1 layer (i.e., a physical layer). The transmitting processor 416 implements coding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to a subcarrier, multiplexes with a reference signal (e.g., pilot) in a time domain and/or a frequency domain, and then uses a Fast Fourier Inverse Transform (IFFT) to generate a physical channel carrying a time-domain multi-carrier symbol stream. The multi-antenna transmitting processor 471 then performs sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from a time domain to a frequency domain after the receiving analog precoding/beamforming operation. In the frequency domain, the physical layer data signal and the reference signal are demultiplexed by the receiving processor 456, wherein the reference signal will be used for channel estimation, and the data signal is recovered after undergoing multi-antenna detection in the multi-antenna receiving processor 458 to recover any spatial stream destined for the first communication device 450. The symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the first communication device 450, the controller/processor 459 provides demultiplexing between transmission and logical channels, packet reassembly, decryption, header decompression, and control signal processing to recover the upper-layer data packets from the core network. The upper-layer data packets are then provided to all protocol layers above the L2 layer. Various control signals may also be provided to the L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transmission channels based on radio resource allocation, and implements the functions of the L2 layer for the user plane and the control plane. The controller/processor 459 is also responsible for retransmission of lost packets and signalings to the second communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 via the transmitting device 454 after undergoing analog precoding/beamforming operations in the multi-antenna transmitting processor 457. Each transmitting device 454 first converts the baseband symbol stream provided by the multi-antenna transmitting processor 457 into a radio frequency symbol stream, and then provides it to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transmission and logical channels, packet reassembly, decryption, header decompression, and control signal processing to recover upper-layer data packets from the UE450. The upper-layer data packets from the controller/processor 475 may be provided to the core network.

As one embodiment, the first communication device 450 comprises: at least one processor and at least one memory, the at least one memory comprising a computer program code; and the at least one memory and the computer program code are configured to be used together with the at least one processor; and the first communication device 450 at least: executes a first RA process, the first RA process comprising initialization; selection of a first RA resource; and transmission of a first message in the first RA resource, wherein the first RA resource is located on a first carrier; whether the first carrier is obtained in the initialization of the first RA process is related to a trigger event of the first RA process; when the first RA process is triggered by SDT, the first carrier is obtained before the first RA process or obtained in the initialization of the first RA process; when the first RA process is triggered by other events, the first carrier is obtained in the initialization of the first RA process; and candidates for the other events include initial access.

As one embodiment, the first communication device 450 comprises: a memory that stores a computer-readable instruction program, the computer-readable instruction program generating actions when executed by at least one processor, and the actions comprising: executing a first RA process, the first RA process comprising initialization; selection of a first RA resource; and transmission of a first message in the first RA resource.

As one embodiment, at least one of the antenna 452, the receiving device 454, the receiving processor 456, and the controller/processor 459 is used for measuring RSRP of a first RS resource.

As one embodiment, at least one of the antenna 452, the receiving device 454, the receiving processor 456, and the controller/processor 459 is used for measuring RSRP of a first RS resource.

As one embodiment, at least one of the antenna 452, the transmitting device 454, the transmitting processor 468, and the controller/processor 459 is used for sending a first message.

As one embodiment, the first communication device 450 corresponds to a first node in the present application.

As one embodiment, the second communication device 410 corresponds to a second node in the present application.

As one embodiment, the first communication device 450 is one piece of user equipment.

As one embodiment, the first communication device 450 is one terminal device.

As one embodiment, the first communication device 450 is one IoT device.

As one embodiment, the first communication device 450 is one relay device.

As one embodiment, the first communication device 450 is one test device.

As one embodiment, the second communication device 410 is one basestation device.

As one embodiment, the second communication device 410 is one relay device.

As one embodiment, the second communication device 410 is one test device.

### Embodiment 5

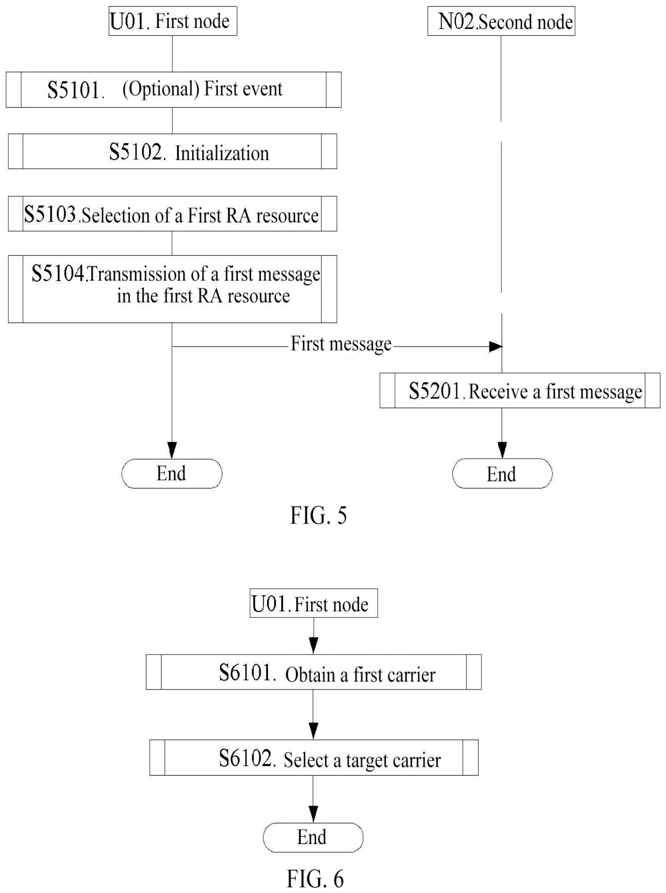

Embodiment 5 illustrates a flowchart of a first message according to one embodiment of the present application, as shown in FIG. 5. A first event in FIG. 5 is optional.

For **a first node U01**, in step S5101, a first event occurs; in step S5102, initialization is executed; in step S5103, a first RA resource is selected; and in step S5104, a first message is transmitted in the first RA resource.

For **a second node N02**, in step S5201, the first message is received in the first RA resource.

In Embodiment 5, steps S5102, S5103, and S5104 all belong to a first RA process; a first event is used for triggering the first RA process; the first RA resource is located on a first carrier; whether the first carrier is obtained in the initialization of the first RA process (i.e., step S5102) is related to a trigger event of the first RA process; when the first is triggered by other events (other than SDT), the first carrier is obtained in the initialization (i.e., step S5102) of the first RA process; and candidates for the other events include initial access.

As one embodiment, in Embodiment 5, sdt-RSRP-Threshold is not configured.

As one embodiment, when the first event is SDT, the first carrier is obtained before the first RA process (i.e., before step S5102), for example, in step S5101.

As one embodiment, when the first event is SDT, the first carrier is obtained in the initialization (i.e., step S5102) of the first RA process.

As one embodiment, the first event is SDT, and the first event comprises:
obtaining a first carrier; and
in response to the presence of valid RA resources on the first carrier, initiating a first SDT process,
wherein the first SDT process is used for triggering the first RA process.

As one sub-embodiment of the above embodiment, the action of obtaining a first carrier comprises: when RSRP of a first RS resource is less than the rsrp- ThresholdSSB-SUL, selecting an SUL carrier (i.e., the first carrier); otherwise, selecting an NUL carrier (i.e., the first carrier).

As one sub-embodiment of the above embodiment, the phrase "the presence of valid RA resources on the first carrier" comprises: on the first carrier, one RA resource set for RA-SDT is configured and can be selected according to Chapter 5.1.1b of TS38.321.

As one sub-embodiment of the above embodiment, the initialization (i.e., step S5102) of the first RA process does not comprise carrier selection.

As one sub-embodiment of the above embodiment, the initialization (i.e., step S5102) of the first RA process comprises carrier selection, and the first message is transmitted in the first RA resource, i.e, step S5104 is executed only when the first carrier is selected in the carrier selection of the first RA process.

As one specific implementation of the above sub-embodiment, the first node is maintained in an RRC_inactive state only when the first carrier is selected in the initialization of the first RA process.

As one specific implementation of the above sub-embodiment, the first node is maintained in an RRC_inactive state instead of entering an RRC_idle state only when the first carrier is selected in the initialization of the first RA process.

As one embodiment, the first event is SDT, and the first event comprises:
obtaining a target carrier; and
in response to the presence of valid RA resources on the target carrier, initiating a first SDT process,
wherein the first SDT process is used for triggering the first RA process; and the initialization (i.e., step S5102) of the first RA process comprises carrier selection, and the first carrier is obtained in the initialization of the first RA process to ensure that both of two candidate carriers for the carrier selection comprise valid RA resources.

In the above embodiment, the selection of the target carrier is only used for confirming whether the conditions for initiating RA-SDT are met; and the first carrier for transmitting the first message is obtained in the initialization of the subsequent first RA process.

As one embodiment, the action of obtaining a target carrier comprises: when RSRP of a first RS resource is less than the rsrp- ThresholdSSB-SUL, selecting an SUL carrier (i.e., the target carrier); otherwise, selecting an NUL carrier (i.e., the target carrier); and the phrase "the presence of valid RA resources on the target carrier" comprises: on the target carrier, one RA resource set for RA-SDT is configured and can be selected according to Chapter 5.1.1b of TS38.321.

As one embodiment, the action of initiating a first SDT process comprises: notifying a higher layer that the conditions for initializing SDT are met.

As one embodiment, the action of initiating a first SDT process comprises: notifying an RRC layer from an MAC layer that conditions for initializing SDT are met.

As one embodiment, the action of initiating a first SDT process comprises: initiating an RRC resume process for SDT.

As one embodiment, the action of initiating a first SDT process comprises: considering that an SDT process is ongoing.

As one embodiment, the initialization, i.e., step S5102, comprises: setting RA_TYPE to 4-stepRA or 2-stepRA.

As one embodiment, the first message is an Msg1 or an MSGA.

As one embodiment, when the RA_TYPE is set to 4-stepRA, the first message is an Msg1.

As one embodiment, the first RA resource comprises one PRACH (Physical Random Access Channel) occasion and one RA preamble.

As one embodiment, when the RA_TYPE is set to 2-step RA, the first RA resource comprises one PUSCH (Physical Uplink Shared Channel) occasion corresponding to the one PRACH occasion and the one RA preamble, and the first message is an MSGA.

As one embodiment, the action of selecting the first RA resource comprises: selecting an SSB or a CSI-RS according to RSRP, then selecting a corresponding PRACH occasion, and then selecting an RA preamble.

As one embodiment, the action of selecting the first RA resource comprises: selecting an RA preamble group according to the size of data to be transmitted, and candidates for the RA preamble group comprises an RA preamble group A and an RA preamble group B.

For more specific scheme regarding the selection of the first RA resource, please refer to Chapter 5.1.2 or 5.1.2a of TS38.321.

### Embodiment 6

Embodiment 6 illustrates a flowchart of obtaining a first carrier according to one embodiment of the present application, as shown in FIG. 6.

A first node U01 receives a first carrier in step S6101; and selects a target carrier in step S6102.

In Embodiment 6, a candidate for the first carrier and a candidate for the target carrier both comprise an SUL carrier and an NUL carrier; steps S6101 and S6102 belong to steps S5101 and S5102 in Embodiment 5 respectively; and the first RA process is triggered by SDT.

As one embodiment, both the action of obtaining a first carrier and the action of selecting a target carrier comprise: when RSRP of a first RS resource is less than the rsrp-ThresholdSSB-SUL, selecting an SUL carrier; otherwise, selecting an NUL carrier.

As one sub-embodiment of the above embodiment, RSRP of a first RS resource used for obtaining a first carrier is stored and used for selecting a target carrier.

As one sub-embodiment of the above embodiment, RSRP of a first RS resource used for obtaining a first carrier is different from RSRP of the first RS resource used for selecting a target carrier; and the first message is sent in the first RA resource, i.e, step S5104 is executed only when the first carrier is selected in the carrier selection of the first RA process.

### Embodiment 7

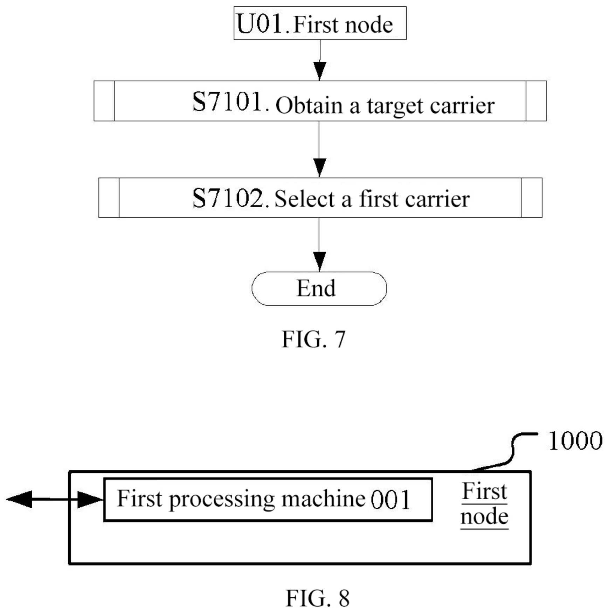

Embodiment 7 illustrates a flowchart of obtaining a first carrier according to another embodiment of the present application, as shown in FIG. 7.

A first node U01 obtains a target carrier in step S7101; and selects a first carrier in step S7102.

In Embodiment 7, a candidate for the first carrier and a candidate for the target carrier both comprise an SUL carrier and an NUL carrier; steps S7101 and S7102 belong to steps S5101 and S5102 in Embodiment 5 respectively; and the first RA process is triggered by SDT.

As one embodiment, both the action of obtaining a first carrier and the action of selecting a target carrier comprise: when RSRP of a first RS resource is less than the rsrp-ThresholdSSB-SUL, selecting an SUL carrier; otherwise, selecting an NUL carrier; both the SUL carrier and the NUL carrier comprise valid RA resources.

As one sub-embodiment of the above embodiment, RSRP of a first RS resource used for obtaining a first carrier is different from RSRP of the first RS resource used for selecting a target carrier.

As one sub-embodiment of the above embodiment, regardless of whether the target carrier and the first carrier are the same, the first message is transmitted in the first RA resource, i.e., step S5104 is executed.

### Embodiment 8

Embodiment 8 illustrates a structural block diagram of a processing device used in a first node according to one embodiment of the present application, as shown in FIG. 8. In FIG. 8, the processing device 1000 in the first node comprises a first processing machine 1001.

The first processing machine 1001 executes a first RA process, the first RA process comprising initialization; selection of a first RA resource; and transmission of a first message in the first RA resource,
wherein the first RA resource is located on a first carrier; whether the first carrier is obtained in the initialization of the first RA process is related to a trigger event of the first RA process; when the first RA process is triggered by SDT, the first carrier is obtained before the first RA process; when the first RA process is triggered by other events, the first carrier is obtained in the initialization of the first RA process; and candidates for the other events include initial access.

As one embodiment, the first processing machine 1001 obtains a first carrier; and in response to the presence of valid RA resources on the first carrier, initiating a first SDT process, wherein the first SDT process is used for triggering the first RA process.

As one embodiment, the first RA process is triggered by SDT, and the initialization of the first RA process does not comprise carrier selection.

As one embodiment, the first RA process is triggered by SDT, the initialization of the first RA process comprises carrier selection, and the first message is transmitted in the first RA resource only when the first carrier is selected in the carrier selection of the first RA process.

As one embodiment, the first node is maintained in an RRC_inactive state instead of entering an RRC_idle state only when the first carrier is selected in the initialization of the first RA process.

As one embodiment, the first processing machine 1001 comprises a receiving function and a transmitting function.

As one embodiment, the receiving function is completed by an antenna 452, a receiving device 454, a multi-antenna receiving processor 458, a receiving processor 456, a controller/processor 459, a memory 460, and a data source 467 in FIG. 4 of the present application.

As one embodiment, the receiving function is completed by an antenna 452, a receiving device 454, a multi-antenna receiving processor 458, and a receiving processor 456 in FIG. 4 of the present application.

As one embodiment, the receiving function is completed by an antenna 452, a receiving device 454, and a receiving processor 456 in FIG. 4 of the present application.

As one embodiment, the transmitting function is completed by an antenna 452, a transmitting device 454, a multi-antenna transmitting processor 457, a transmitting processor 468, a controller/processor 459, a memory 460, and a data source 467 in FIG. 4 of the present application.

As one embodiment, the transmitting function is completed by an antenna 452, a transmitting device 454, a multi-antenna transmitting processor 457, and a transmitting processor 468 in FIG. 4 of the present application.

As one embodiment, the transmitting function is completed by an antenna 452, a transmitting device 454, and a transmitting processor 468 in FIG. 4 of the present application.

Those skilled in the art will appreciate that all or some of the steps in the above method may be implemented by instructing relevant hardware by a program, and the program can be stored in a computer-readable storage medium, such as a read-only memory, a hard disk or an optical disk. Optionally, all or some of the steps of the above embodiments may also be implemented using one or more integrated circuits. Correspondingly, each module unit in the above embodiments may be implemented in the form of hardware or in the form of a software function module, and the present application is not limited to any specific form of software and hardware combination. The user equipment, terminals and UE in the present application include but are not limited to drones, communication modules on drones, remote-controlled aircraft, airplanes, small aircraft, mobile phones, tablet computers, laptops, vehicle-mounted communication devices, radio sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base station or system equipment in the present application includes but is not limited to macro cellular base stations, micro cellular base stations, Femtocells, relay base stations, gNB (NR node B) NR node B, TRPs (Transmitter Receiver Points) and other wireless communication devices.

The above is only a preferred embodiment of the present application and is not used to limit the scope of protection of the present application. Any modifications, equivalent replacements, improvements, etc. made within the spirit and principles of the present application should be comprised in the scope of protection of the present application.

## Claims

1. A first node used for wireless communication, comprising:
a first processing machine executing a first RA process, the first RA process comprising initialization; selection of a first RA resource; and transmission of a first message in the first RA resource,
wherein the first RA resource is located on a first carrier; whether the first carrier is obtained in the initialization of the first RA process is related to a trigger event of the first RA process; when the first RA process is triggered by SDT, the first carrier is obtained before the first RA process or obtained in the initialization of the first RA process; when the first RA process is triggered by other events, the first carrier is obtained in the initialization of the first RA process; and candidates for the other events comprise initial access.

2. The first node according to claim 1, comprising:
the first processing machine obtaining the first carrier; and in response to the presence of valid RA resources on the first carrier, initiating a first SDT process,
wherein the first SDT process is used for triggering the first RA process.

3. The first node according to claim 1 or 2, wherein the first RA process is triggered by the SDT, the first carrier is obtained before the first RA process, and the initialization of the first RA process does not comprise carrier selection.

4. The first node according to claim 1 or 2, wherein the first RA process is triggered by the SDT, the first carrier is obtained before the first RA process; and the initialization of the first RA process comprises carrier selection, and the first message is transmitted in the first RA resource only when the first carrier is selected in the carrier selection of the first RA process.

5. The first node according to claim 4, wherein the first node is maintained in an RRC_inactive state only when the first carrier is selected in the initialization of the first RA process.

6. The first node according to claim 1 or 2, wherein the first RA process is triggered by the SDT; and the initialization of the first RA process comprises carrier selection, and the first carrier is obtained in the initialization of the first RA process to ensure that both of two candidate carriers for the carrier selection comprise valid RA resources.

7. A method in a first node used for wireless communication, comprising:
executing a first RA process, the first RA process comprising initialization; selection of a first RA resource; and transmission of a first message in the first RA resource,
wherein the first RA resource is located on a first carrier; whether the first carrier is obtained in the initialization of the first RA process is related to a trigger event of the first RA process; when the first RA process is triggered by SDT, the first carrier is obtained before the first RA process or obtained in the initialization of the first RA process; when the first RA process is triggered by other events, the first carrier is obtained in the initialization of the first RA process; and candidates for the other events comprise initial access.

8. The method in a first node according to claim 7, comprising:
obtaining a first carrier; and in response to the presence of valid RA resources on the first carrier, initiating a first SDT process,
wherein the first SDT process is used for triggering the first RA process, and the first carrier is determined before the initialization of the first RA process.

9. The method in a first node according to claim 7 or 8, wherein the first RA process is triggered by SDT; and the initialization of the first RA process does not comprise carrier selection.

10. The method in a first node according to claim 7 or 8, wherein the first RA process is triggered by SDT, the first carrier is obtained before the first RA process; and the initialization of the first RA process comprises carrier selection, and the first message is transmitted in the first RA resource only when the first carrier is selected in the carrier selection of the first RA process.
